# EUROPEAN PATENT APPLICATION

(11) **EP 0 770 660 A1**
(43) Date of publication of application: **02.05.1997**
(21) Application number: 96307765.6
(22) Date of filing: 28.10.1996
(51) Int. Cl.: C09K 7/02

(54) **Starch additive for drilling fluids**

(30) Priority: 27.10.1995 GB 9522075
(71) Applicant: B W MUD LIMITED, Aberdeen AB1 4AD (GB)
(72) Inventor: Chapman, John, c/o B W Mud Limited, West Tullos, Aberdeen, AB1 4AD (GB); Ward, Ian, c/o B W Mud Limited, West Tullos, Aberdeen, AB1 4AD (GB)
(74) Representative: Pattullo, Norman

(57) **Abstract**

A drilling fluid comprising modified amylopectin/amylose starch wherein the amylopectin content is within the range of 75 - 100%. The starch has increased branching and increased molecular weight eg; in the range of 100,000 to 10,000,000 compared to the majority of common starches.

## Description

The present invention relates to drilling fluids or muds which are useful in the rotary drilling process used for making wells into subterranean formations containing oil, gas or other minerals. In particular, the invention relates to a drilling mud which contains a novel starch used to improve viscosity.

The term drilling fluid is used to include fluids used for stuck pipe, completion, workover and milling operations.

One characteristic of the adjusted fluid is that of viscosity. Viscosity is used to suspend the solid components in the fluid such as barite. It is also used to assist in the removal of drilled rock cuttings from the wellbore. Several models can be used to describe fluid viscosity such as: Newtonian Fluid, Bingham plastic model, Power law model, Power law model with yield stress, Herschel Bulkley model. Particularly desirable in drilling fluids is a shear thinning fluid. When a fluid is sheared through pumping or other means a shear stress is induced which resists this change. In a Newtonian fluid such as water or white oil for each equal increment of shear rate there is an equal incremental change in shear stress. In many drilling fluids the incremental shear stress induced with each equal increase in shear rate progressively diminishes. This is considered desirable in that there is effectively high viscosity at low shear (to suspend solids when pumping slowly) and low viscosity at high shear when pumping quickly (less power required to pump fluid).

Various additives are used to obtain shear thinning viscosity. These include bentonite, attapulgite and sepiolite clays, xanthan gum and guar gum. Additives such as carboxymethyl cellulose and partially hydrolysed polyacrylamide, when used in combination with clays, are also suitable. Additives vary in their ability to tolerate salinity, hardness and temperature.

Of the above additives xanthan gum is considered to have very desirable properties in terms of shear thinning and resistance to contaminants. Guar gum lacks the hardness resistance and is prone to rapid bacterial attack. Xanthan gum is described as a hetero-polysaccharide with a molecular weight of up to 5 million (US patent 3,243,000(1966)). Many polymers are based on sugars with a wide diversity of properties. For many years those skilled in the art have attempted to simulate xanthan gum properties using other materials without success. These include graft polymers on a modified cellulose base and in conjunction with polyacrylamides.

Commonly used drilling starches (both corn/maize and potato) do not develop viscosity either at their normally used concentration (up to 8 ppb) or even at elevated concentrations up to 20 ppb for special formulations. In many instances this lack of viscosity is a desirable property since starches are normally used as a fluid loss additive. Commonly used starches contain amylopectin and amylose in the ratio of 75:25. Both contain cyclic sugar as the base but have a different linkage in the chain. The amylose produces a linear molecule. The amylopectin contains linkages which allows for a branched chain of variable molecular size.
Throughout this description, ppb relates to pounds per barrel. One pound per barrel equals 2.86kg per m³.

According to the present invention there is provided a drilling fluid comprising modified amylopectin/amylose starch wherein the amylopectin content is within the range of 75 to 100%.

Preferably the starch has increased branching compared to the majority of common starches.

Preferably the starch has increased molecular weight compared to the majority of common starches.

Typically the molecular weight of a starch for use in a drilling fluid according to the present invention is in the range of 100,000 to in excess of 1,000,000, possibly up to 10,000,000.

The starch may be a genetically manipulated starch.

Alternatively, the starch may be a naturally occurring starch, obtainable by selective cultivation.

The starch may further be cross linked with crosslinking agents, such as epichlorohydrin or a phosphate.

The starch may be pregelatinized or further treated to improve performance by enhancing resistance to fermentation and aiding dispersion and solubility in water.

Preferably the drilling fluid will comprise a starch as defined above at a concentration of 0.1 to 30 ppb.

The invention also provides a starch as defined herein for use as a viscosifier in drilling fluids.

The advantages of the invention and the ways in which the disadvantages of previously know arrangements are overcome, include the following;
the starches provide performance similar to gums derived from bacteria in terms of building shearing thinning viscosity in drilling fluids,
the starches are produced by simple industrial processes from readily available raw materials,
the starches are non-ionic giving compatibility with a wider range of ionic solutions and additives than existing products; and
the invention has the benefit over existing starch products of providing viscosity as well as fluid loss control.

These benefits are seen in drilling fluids, workover and completion fluids and milling fluids.

While further modifications and improvements may be made without departing from the scope of this invention, the following is a description of one or more examples of the invention, with reference to the accompanying drawings wherein
Figure 1 illustrates the use of starch as a viscosifier compared to xanthan gum.
Figure 2 illustrates the use of starch as a viscosifier in combination with a Bentonite clay.

It has been found that the amylopectin/amylose ratio can be modified genetically to increase the amylopectin content and to increase the degree of branching. In some cases in excess of 90% amylopectin "waxy" or "pectin" starch can be formed. High amylopectin/amylose ratio starches also occur naturally and can be selectively produced to the same end. The invention illustrates that when used as a viscosifier in drilling fluid formulations waxy starch produces highly shear thinning fluid with desirable properties. The waxy starch may contain 75 - 100% amylopectin which has been modified to increase branching and molecular weight. Molecular weights are typically in the range 100,000 to in excess of 1,000,000, possibly up to 10,000,000. In addition it may contain crosslinking agents to further increase viscosity.

### Example 1

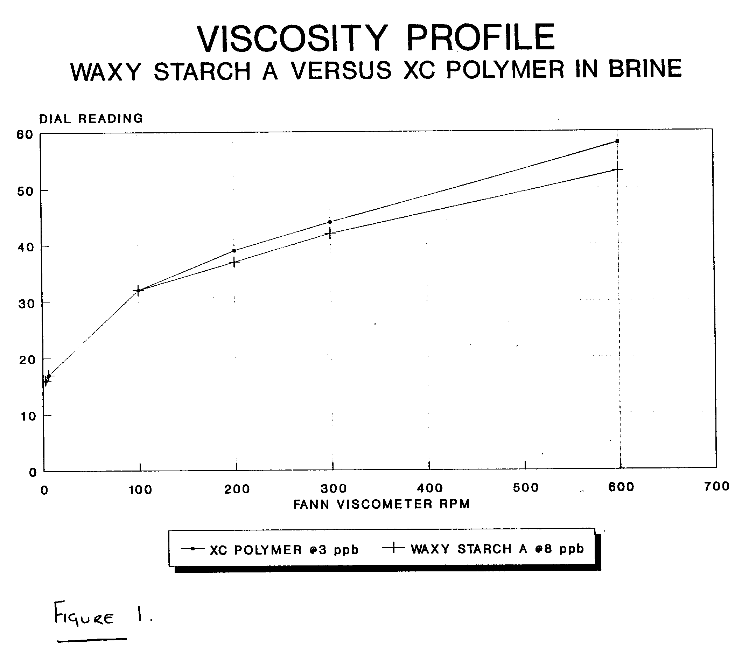

One example is a pregelatinized genetically manipulated maize starch which has been crosslinked (waxy starch A), currently used in the food industry. Tests were carried out with this product in a saturated salt brine containing 35 ppb clay at various concentrations. The results are compared to that obtained with xanthan gum commercially available as "XC Polymer" (TM) Kelco. Rheology was determined at 6 separate shear rates on a Fann viscometer. Rheological parameters; plastic viscosity (PV), yield point (YP) and gels (gel strengths after 10 seconds and 10 minutes), together with fluid loss performance (API) was determined. The results are shown in Table 1. Viscosity profiles are compared in Figure 1.

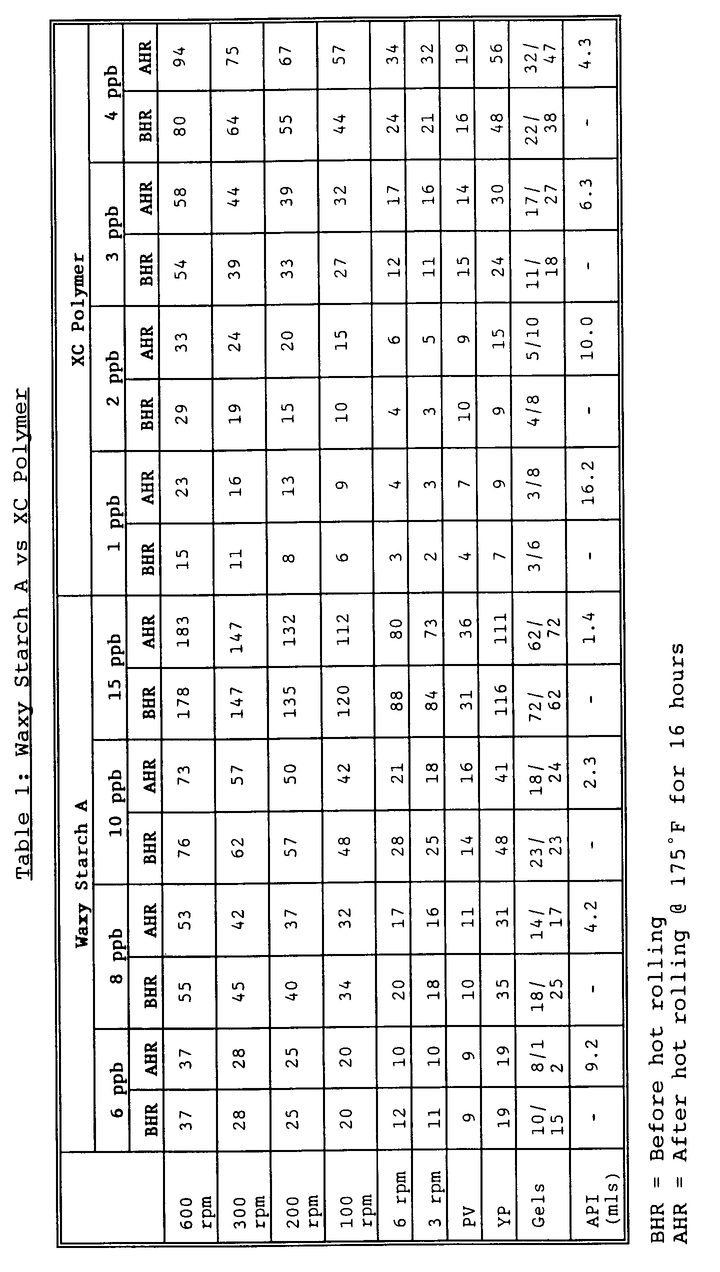

### Example 2

This example further describes the formulation of a new starch additive (waxy starch A) into a fully formulated water based drilling fluid and compares the resulting properties with a conventional drilling fluid containing Xanthan Polymer as a viscosifier.

A water based drilling fluid based on a salt saturated brine formulated with Xanthan Polymer and said starch additive, respectively.

**Table 2**

| | **Xanthan Polymer Fluid** | **Starch Additive Fluid** |
|---|---|---|
| Seawater | 0.4230bbls | 0.4230bbls |
| Caustic Soda | 0.1 ppb | 0.1 ppb |
| Bentonite Clay (40ppb prehydrated) | 164 ppb | 164 ppb |
| Sodium Chloride | 100 ppb | 100 ppb |
| PAC (R)* | 1.0 ppb | ' |
| Starch | 3.0 ppb | ' |
| New Starch Additive | ' | 9.0 ppb |
| XC Polymer | 1.0 ppb | ' |

| | | |
|---|---|---|
| * Polyanionic cellulose | | |
| * bls : barrels | | |
| * ppb : pounds/barrel | | |

Drilling Fluids were tested according to standard API methods immediately on make-up and again after a laboratory ageing process designed to simulate downhold well conditions and consisting of a 16 hour hot rolling in a pressurised cell at 175°F.

The drilling fluids were tested for rheology at 120°F and fluid loss at ambient temperature.
A series of contamination tests was performed on the drilling fluids to assess their robustness in field use. Thus 9 ppb cement, 9 ppb calcium chloride powder and 35 ppb drilled solids was added to the base fluid and the said fluids tested as for the base.

Tables 3 and 4 show the results of these tests.

**Table 3**

| Drilling Fluid Containing Xanthan Polymer | | | | | | | | |
|---|---|---|---|---|---|---|---|---|
| | **Base Mud** | | **Base + Cement** | | **Base + Calcium Chloride** | | **Base + OCMA Clay** | |
| | **BHR** | **AHR** | **BHR** | **AHR** | **BHR** | **AHR** | **BHR** | **AHR** |
| Weight (ppg) | 10.25 | | | | | | | |
| 600 rpm | 104 | 87 | 124 | 125 | 137 | 87 | 218 | 140 |
| 300 rpm | 74 | 62 | 88 | 93 | 101 | 62 | 158 | 98 |
| 200 rpm | 61 | 50 | 73 | 77 | 85 | 52 | 132 | 82 |
| 100 rpm | 44 | 36 | 53 | 59 | 64 | 38 | 99 | 59 |
| 6 rpm | 15 | 12 | 18 | 24 | 26 | 14 | 44 | 25 |
| 3 rpm | 14 | 9 | 15 | 21 | 22 | 11 | 39 | 21 |
| PV | 30 | 25 | 36 | 32 | 36 | 25 | 60 | 42 |
| YP | 44 | 37 | 52 | 61 | 65 | 37 | 98 | 56 |
| Gels | 15/33 | 10/18 | 17/52 | 26/70 | 23/32 | 12/20 | 44/102 | 24/51 |
| API mls | - | 5.2 | - | 11.6 | - | 12.0 | - | 7.1 |
| ppg = pounds per gallon | | | | | | | | |

**Table 4**

| Drilling Fluid Containing New Starch Additive | | | | | | | | |
|---|---|---|---|---|---|---|---|---|
| | **Base Mud** | | **Base + Cement** | | **Base + Calcium Chloride** | | **Base + OCMA Clay** | |
| | **BHR** | **AHR** | **BHR** | **AHR** | **BHR** | **AHR** | **BHR** | **AHR** |
| Weight (ppg) | 10.25 | | | | | | | |
| 600 rpm | 53 | 57 | 62 | 44 | 72 | 49 | 97 | 77 |
| 300 rpm | 39 | 41 | 47 | 33 | 53 | 35 | 75 | 57 |
| 200 rpm | 32 | 34 | 40 | 27 | 47 | 29 | 66 | 48 |
| 100 rpm | 25 | 27 | 32 | 22 | 37 | 22 | 54 | 37 |
| 6 rpm | 14 | 12 | 17 | 9 | 17 | 8 | 37 | 22 |
| 3 rpm | 13 | 11 | 15 | 8 | 15 | 7 | 33 | 18 |
| PV | 14 | 16 | 15 | 11 | 19 | 14 | 22 | 20 |
| YP | 25 | 25 | 32 | 22 | 34 | 21 | 53 | 37 |
| Gels | 12/15 | 10/11 | 12/8 | 8/13 | 14/17 | 7/10 | 33/32 | 22/34 |
| API mls | - | 4.4 | - | 4.4 | - | 3.6 | - | 3.9 |

Drilling fluids can be formulated with new starch additive which give suitable anti-settling performance and rheological profiles for transport of cuttings in the wellbore. This is demonstrated with the comparison of Yield Points (YP) and high 6 rpm readings. The Plastic Viscosity (PV) of the new fluids are also lower than conventional Xanthan Polymer fluids.

The drilling fluids are stable to contamination and temperature and surprisingly have fluid loss performance similar or better to Xanthan Polymer fluids which contain specific polymer fluid loss materials (starch/PAC). This allow the principal parameters of a drilling fluid; rheology and fluid loss, to be controlled by just one additive.

### Example 3

This example describes the formulation of a starch additive according to the invention into a highly inhibitive silicate drilling fluid.

A highly inhibitive water based silicate drilling fluid with a pH of 11.5 was formulated with the new starch additive.

**Table 5**

| | |
|---|---|
| Saturated Salt Brine (s.g 1.20) | 0.5472 bbls |
| Caustic Soda | 0.15 ppb |
| Bentonite Clay (30 ppb Prehydrated) | 123 ppb |
| Sodium Chloride | 46.14 ppb |
| Starch Additive | 10.0 ppb |
| Sodium Silicate Solution | 32 ppb |

Drilling fluids were tested according to Example 1 and 2. Hot roll ageing was performed at 150°F instead of 175°F.

The Table 6 shows the performance of the fluid in standard tests.

**Table 6**

| Silicate Drilling Fluid Containing Starch Additive | | |
|---|---|---|
| | **BHR** | **AHR** |
| Weight ppg | 10.4 | |
| 600 rpm | 58 | 64 |
| 300 rpm | 47 | 50 |
| 200 rpm | 42 | 44 |
| 100 rpm | 35 | 35 |
| 6 rpm | 15 | 16 |
| 3 rpm | 11 | 12 |
| PV | 11 | 14 |
| YP | 36 | 36 |
| Gels | 10/11 | 10/14 |
| API (mls) | - | 2.7 |

A stable, effective drilling fluid can be formulated with the new starch additive.

### Example 4

In order to illustrate the synergistic viscosity effect between new starch additive and clay present in a water based drilling fluid tests were performed. The "low-end rheology" (6 rpm Fann Viscometer reading) due to combinations of Bentonite clay and starch additive in a freshwater fluid demonstrated a surprising synergistic effect between these two components.

Fluids were made up consisting of between 5 and 20 ppb starch additive in combination with 0, 5, 10 and 15 ppb (solids) Bentonite Clay.

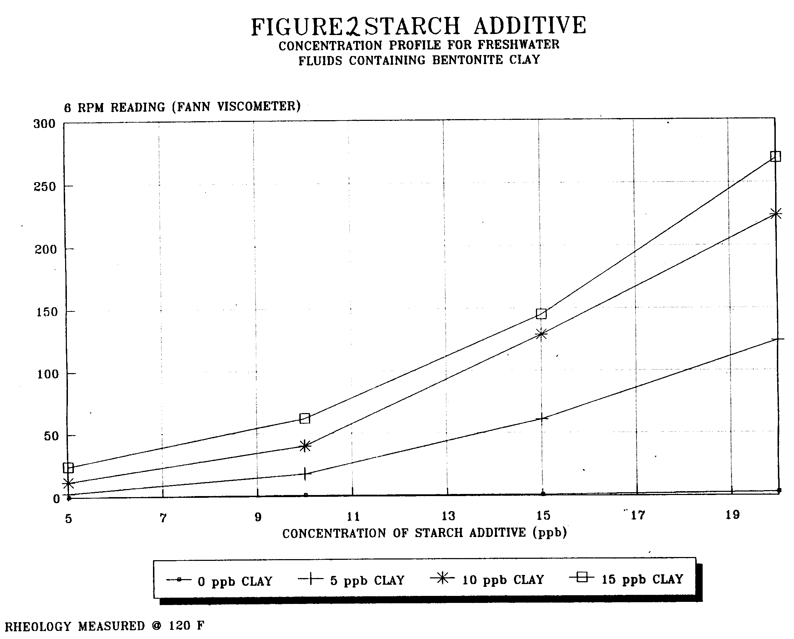

Figure 2 shows the viscosity at 120°F. Fluids containing zero clay gave a very little viscosity but this increased significantly upon the addition of clay showing a highly synergistic rheology suitable for antisettling properties and hole cleaning performance in drilling fluids.

The starches described herein may be used with high hardness and cement.

They can be reacted to form starch ethers for enhanced contaminant tolerance, temperature stability and resistance to rapid biodegradation.

The starch may be used in conjunction with xanthan gum, guar gum, carboxymethylcellulose, polyanionic cellulose and other cellulosic polymers or with clay products to produce enhanced synergistic viscosity in combination.

In divalent brines such as calcium chloride, bromide, zinc bromide or calcium nitrate the starch may control viscosity and fluid loss.

The starch may be modified to become acid soluble.

The starch can control fluid loss simultaneously with viscosity in drilling fluids.

## Claims

1. A drilling fluid comprising an amylopectin/amylose starch wherein the amylopectin content is within the range of 75 - 100%.

2. A drilling fluid according to claim 1 wherein the starch has increased branching compared to the majority of common starches.

3. A drilling fluid according to either claim 1 or 2 wherein the starch has increased molecular weight compared to the majority of common starches.

4. A drilling fluid according to any of the preceding claims wherein the molecular weight of the starch is in the range of 100,000 to 10,000,000.

5. A drilling fluid according to any of the preceding claims wherein the starch may be a genetically modified or manipulated starch.

6. A drilling fluid according to any of claims 1 to 4 wherein the starch may be a naturally occurring starch, obtainable by selective cultivation.

7. A drilling fluid according to any of the preceding claims wherein the starch may further comprise cross-linking agents.

8. A drilling fluid according to any of the preceding claims wherein the cross-linking agent is epichlorohydrin.

9. A drilling fluid according to any of the preceding claims wherein the starch may be pregelatinized or otherwise modified to allow it to become more water soluble, dispersive or stable to degradation.

10. A drilling fluid according to to any of the preceding claims comprising a starch at a concentration of 0.1 to 30 ppb.

11. A starch for use in a drilling fluid as claimed in any of claims 1 to 10.
